# EUROPEAN PATENT SPECIFICATION

(11) **EP 4 489 450 B1**
(45) Date of publication and mention of the grant of the patent: **03.09.2025**
(21) Application number: 23184121.4
(22) Date of filing: 07.07.2023
(51) Int. Cl.: H04W 4/50, H04L 67/59, H04W 8/22, H04L 67/10

(54) **UE-SUBSTITUTE-UNIT OF A COMMUNICATION NETWORK**
UE-SUBSTITUTIONSEINHEIT EINES KOMMUNIKATIONSNETZES
UNITÉ DE SUBSTITUTION D'UE D'UN RÉSEAU DE COMMUNICATION

(43) Date of publication of application: 08.01.2025
(73) Proprietor: Deutsche Telekom AG, 53113 Bonn (DE)
(72) Inventor: EINSIEDLER, Hans Joachim, 13189 Berlin (DE); SCHNEIDER, Daniela, 1150 Wien (AT)
(74) Representative: Braun-Dullaeus Pannen Emmerling Patent- & Rechtsanwaltspartnerschaft mbB

(56) References cited:
- EP-A1- 2 704 396
- WO-A2-2015/102608

## Description

The invention relates to efficient processing of communication services.

In proposed future network infrastructures end-to-end service-based architecture (SBA) and/or cloud-native driven telecommunication infrastructure as well, end-devices will be part of a cloud-native environment. Such end-devices can be vehicles, drones, trains and/or user equipment like smartphones, tablets, computers. In the following, we will name all those devices for simplicity reasons user equipment (UE). The UE is configured to communicate at least over a mobile radio (4G, 5G, Wi-Fi, Bluetooth, and future 3GPP and IEEE radio interfaces) communication link.

The idea behind a cloud-native infrastructure is that necessary data is being outsourced from an actual domain, an entity, a device, a network function and/or a UE (statelessness of entities) to a database connected through a communication network. The necessary data is the data of the respective network functions that is being processed to provide a service or to run an application. The network functions perform certain tasks relating to the execution of the application and/or providing the (communication) service. For example, this means that the UE stores its data within a state and parameter database within the communication network instead or in addition of storing it on its own memory.

Hence, the end-to-end architecture comprises different domains that fulfill different tasks within the communication network. The domains can be actual entities and/or can be implemented as virtual entities on servers. Those domains can be a central cloud, a transport, multi-access edge computing instances, different (radio) access networks, and end-device(s). Those domains comprise the typical hardware that is configured to provide connectivity, storage, and processing units. The network functions can be implemented on the processing units as algorithms.

Functional-wise, each domain will have network functions (NF) in the data plane (DP) for forwarding and manipulation of the user and application traffic and in the control plane (CP) for the setup and control of the data plane network functions (DP NFs). The database for the NFs is the network data layer (NDL). In 3GPP the data plane is called a user plane (UP).

Hence, the NFs will not keep the states and parameters after successful execution of the function but store them in the database. When processes start, each NF will request or pull its required states and/or parameters from that (external) database and after completing the execution of the function, each NF will send or push the new states and/or new parameters back into this database. The database can be a distributed element of the cloud.

Hence, the database is an elementary part of all the data traffic. As this provides many advantages, this can also cause problems in certain cases. If one of the domains and/or the UE suffers from a broken communication link to the database, its network functions cannot fulfill its tasks because they cannot pull and/or push the data into the database. These cases are likely to happen if the UE is being connected by means of a radio technology (4G, 5G, Wi-Fi, Bluetooth, and future 3GPP and IEEE radio interfaces) to the rest of the communication network. Typically, all the other domains can be located within the core of the communication network that does not suffer from unstable communication links. The radio communication links can be interrupted according to certain connection conditions like if the line of sight cannot be provided anymore, a distance to the base station is too far, no hand-over to another base station is possible, the connection plug was pulled off, etc.

As a result of such a loss of communication due to a broken radio link, the UEs are not anymore part of the end-to-end system and the corresponding data traffic will be lost so that it can happen that the communication, service and/or application cannot run anymore.

EP 2 704 396 A1 (TATA CONSULTANCY SERVICES LTD [IN]) 5 March 2014, considers the cases of loss of the UE or network loss or damaged UE with corrupted memory, etc. A virtual image of the UE is created in the (virtual) network. The virtual image also runs in the UE.

WO 2015/102608 A2 (CITRIX SYSTEMS INC [US]) 9 July 2015, discloses a pseudo device being representative of a user device. The pseudo device may run in cloud environment.

In the view of above, it is an object of the present invention to provide techniques that enable running a communication, a service and/or application even if the communication link to an UE breaks at least temporarily.

This object is solved by the features of the independent claims.

The features of the various aspects of the invention described below or the various examples of implementation may be combined with each other, unless this is explicitly excluded or is technically impossible.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

According to a first aspect of the invention, a method for communication in a communication system is being provided. In particular, the communication is being related to running a certain communication service and/or application. The method comprises the following steps:
- providing domain units, wherein the domain units provide a functionality of the network for communication by means of network functions; wherein at least one of the domain units is represented by a UE having at least one UE-network-function, wherein the UE communicates with the network by means of a radio link;
   ∘ each domain unit can have different network functions that can correspond to different workflow tasks of the communication;
   ∘ the network functions can be related to operating a service like video communication, calls, remote control of a vehicle and/or drone, etc.
   ∘ the radio link can be a Wi-Fi, Bluetooth, or other future IEEE radio technologies and/or a cellular (4G, 5G, or other futures 3GPP radio technologies) communication link.
   ∘ the UE-network-function is the network function that is being implemented on the UE to distinguish it from other network functions from the other domains; for example, in the case of a remote control of a drone these network functions can be receiving and/or acknowledging steering commands, sending location and/or status information;
   o the domain units can be hardware entities located at various locations within the communication network and/or at least some of the domain units can be implemented as virtual or cloudified entities on servers within the communication network;
   o typically, all the domain units with the exception of the UE can be connected to the communication system as to provide a stable communication link to the state and parameter database; hence, in an embodiment, the domain units can be located within the core network, wherein the UE is being connected via a wireless or mobile radio communication link to the other parts of the communication system;
- providing a database within the communication system, wherein the domain units communicate via a communication link with the database, and wherein the domain units each retrieve data from the database and/or write data output obtained by their network functions into the database to execute their network functionality;
   o the database can be the state and parameter database described above. The retrieving and/or writing step of the data can also be named a pulling and/or pushing step of the data with respect to the database;
   o within the database, the data is being located and/or specified in a way that the NFs find the corresponding data in the pulling step with respect to the current execution step; it is possible that the data shows certain information within a data header that specifies its corresponding network function and/or the network function it is being intended for; hence, a network function can find its necessary data within the database;
   o within the context of the invention, the communication link connects the various domains relating to the service, application, and/or communication. The communication link can comprise fixed communication link parts and/or radio communication link parts. As mentioned above, the UE can be connected via the radio communication link to the other domains; hence, the radio link can be part of the communication link in that sense;
- providing a UE-substitute-unit within the network having at least one of said UE-network-functions, said UE-substitute-unit at least temporarily substituting for said UE, wherein the UE-substitute-unit executes the at least UE-network-functions and retrieves data from said database and/or writes data output obtained by the UE-network-function into said database.
   ∘ the UE-substitute-unit can be configured to mirror at least the current UE-network-functions, so that all the other domains within the communication network do not see any difference if the UE or if the UE-substitute-unit has processed the data; this provides the advantage that even if the UE suffers from a broken radio link and is - as a consequence - not being able to take part in the communication, the running service and/or the running application the UE-substitute-unit can take over so that no data traffic is being lost; with respect to its functionality, the UE-substitute-unit could also be named a Twin-UE or a demon-UE;
   o the UE-substitute-unit can be a hardware entity located within the communication network or it can be a virtual or cloudified UE-substitute-unit implemented on a server within the communication network. In particular, the virtual implementation provides a high degree of flexibility;
   o to ensure a stable communication link, the UE-substitute-unit can be located within the core of the communication network. In particular, the UE-substitute-unit can be located close to the other domains involved in the communication; to provide a stable communication link, the communication link part towards the UE-substitute-unit can be a fixed line communication link;
   ∘ it is possible that the UE-substitute-unit is only provided with respect to certain users, applications and/or services. This provides the advantage that network resources are only being used for the UE-substitute-unit in well-defined cases. For example, a service relating to a remote control of the vehicle typically has a high-priority to ensure that no data traffic is being lost. Hence, based on services ID, the UE-substitute-unit can be used;

It is also possible that the setup of the UE-substitute-unit can be related to certain context information and/or machine learning algorithms and can depend on the likelihood that the radio communication link might be interrupted for a certain time. As already explained above, the UE-substitute-unit mimics the NF of the UE and can be synchronized with the UE to obtain the NF of the UE that shall be used next. This synchronization provides the advantage that the UE-network-function of the UE-substitute-unit is always up-to-date and can take over as soon as the connection to the UE is being lost. Typically, CP NFs will respond to requests, wherein DP NFs will reply with data traffic. In an embodiment, when the UE is being connected to the communication system again, the UE-substitute-unit can also synchronize its status and can go into an observer mode again. However, it is also possible that the observer mode is being done by a UE-substitute-controller - as will be explained in the following. The UE-substitute-controller and the UE-substitute-unit can be implemented as a single UE-substitute-entity.

In an embodiment, the communication link between the various domains is multicast and/or bus capable. In an embodiment, the address of the multicast message is defined in the multicast address range of the communication system and is the same for the UE and the UE-substitute-controller and/or the UE-substitute-unit. If the UE-substitute-controller sets up the UE-substitute-unit - as will be discussed in the following - the UE-substitute-controller can be configured to forward the data packet to the UE-substitute-unit.

This provides the advantage that the data packets can be sent to a certain domain, for example the UE, and that another domain and/or the UE-substitute-controller is aware that the data packet has been sent to the UE. Another advantage of the multicast capability is that more than one domain can be assigned to the data packet. Hence, if a first and the second domain are specified with their respective destination addresses within the data packet, the second domain could take over the processing of the data packet, if the first domain does not respond, for example because it suffers from a broken link. As an example, the UE-substitute-unit can take over the processing of the data packet if the UE does not respond. The communication between the domains and/or the respective NFs can be ensured by means of a service-based interface. This can work based on a producer-consumer principle. The SBI can be configured to be a bus or another communication architecture. Using a bus architecture provides the advantage that all the other domains are aware of all the data packets that are being sent over the communication link.

This enables that domains and/or NFs can listen in the background if the data packet is being processed by the domain and/or NFs that corresponds to its destination address. As an example: The UE-substitute-unit and/or the UE-substitute-controller know that the data packet is actually being sent to the UE because it can read the corresponding destination address of the UE. The UE-substitute-unit and/or the UE-substitute-controller can listen to the data traffic and can observe that the UE did not process the data packet because it did not send an appropriate answer. The answer can be a data packet to the state and parameter database. For that purpose, the UE-substitute-unit and/or the UE-substitute-controller has to also know the address of the state and parameter database. Hence, the UE-substitute-unit can take over the processing of the data packet intended for the UE if the UE does not send an answer and/or if the UE-substitute-unit determines that the communication link to the UE is broken.

In the latter case that the UE-substitute-unit needs not to wait for the appropriate answer this speeds up processing of the data packet and reduces latency.

In an embodiment, the UE and/or an application "App" running on the UE triggers an instantiation of the UE-substitute-unit. The trigger signal can be sent to the UE-substitute-controller, which sets up the UE-substitute-unit. Hence, the UE and/or the app can be provided with an address of the UE-substitute-unit and/are the UE-substitute-controller. It is possible, that this address is being exchanged during the handshake communication to set up the communication of the UE. The UE-substitute-controller can be implemented within the UE and/or within the core of the communication system.

This provides the advantage that the UE and/or an application running on the UE anyhow regularly check the quality of its radio link. Hence, the UE is a very efficient location and determining the quality of the communication link. Hence, the UE and/or the App can trigger the instantiation of the UE-substitute-unit. The instantiation can comprise synchronizing an already implemented UE-substitute-unit with the current network function of the UE and/or to actually set up the UE-substitute-unit as a virtual or cloudified entity on a server. Typically, one implementation of the UE-substitute-unit as hardware can serve for more than one UE. In this case, the UE-substitute-unit needs to be provided with an ID of the UE and/or the service so that it can assign the processing of the data packet accordingly. Initiating the UE-substitute-unit based on the trigger signal, provides the advantage that network resources can be spared if the communication links are stable, and the UE-substitute-unit will not be used or that it is highly unlikely to use the UE-substitute-unit. In an embodiment, a setting of the UE and/or a setting of an application "App" running on the UE triggers an instantiation of the UE-substitute-unit. This provides the advantage that it can be chosen if the UE and/or the app sends the triggers signal or not.

In an embodiment, an UE-substitute-controller, in particular the UE-substitute-controller mentioned above, and/or the UE monitors the quality of the radio link sends the trigger signal to instantiate the UE-substitute-unit
- if the quality of the radio link is lower than a first threshold, and/or
   o the quality can be described as QoS values like latency, bandwidth, signal strength etc. It is possible that different first thresholds are being set depending on the application running on the UE and/or depending on the UE itself; this provides the advantage that the UE-substitute-unit can be set up in a flexible way according to required demands of individual applications and/or UEs.
- if a trained artificial intelligence of the UE and/or UE-substitute-controller monitors the quality of the radio link and/or conditions of the UE creates a trigger command, in particular if a probability that the radio link will fail is lower than a second threshold.
   ∘ the artificial intelligence can be trained with multiple cases in which the breakdown of the radio link occurred or in which the radio link remained stable. The training with the appropriate data enables the artificial intelligence to judge if the breakdown of the radio link is being likely even if this situation has not yet occurred. Such an artificial intelligence gets better over the time by using more and more training data so that it can be expected that the trained artificial intelligence will be able to very precisely judge the risk of a failure of the radio link; the training data can even take locations of the UE and/or historic data into account. It is possible that different second thresholds are being set depending on the application running on the UE and/or depending on the UE itself. The first and the second threshold can be different or the same.

This provides the advantage of having different criteria when to use the UE-substitute-unit. Those criteria can be based on the experience of multiple users and/or on the scale of single users of the UE.

The UE-substitute-controller implemented within the core of the communication system can monitor the quality of the radio link of multiple UEs. It is possible that the UE-substitute-controller monitors the quality of the radio link by analyzing data packets, the condition of network cells in which the UE is being located and/or by receiving the trigger signal mentioned above. The first option can be described as an active monitoring, wherein the second option can be described as passive monitoring.

In an embodiment, the application running on the UE and/or a user defines the first threshold and/or the second threshold.

This provides the advantage that the threshold can be set individually according to different use cases.

In an embodiment, the UE-substitute-unit and/or the UE-substitute-controller signals a communication address of the UE-substitute-unit to the other domain units.

This provides the advantage that the UE-substitute-unit and/or the UE-substitute-controller can be addressed by using multicast techniques when sending the data packet.

In an embodiment, UE-substitute-controller is implemented on the UE or within other parts of the communication system, in particular within the core of the communication system.

If the UE-substitute-controller is implemented on the UE this provides the advantage that can be used by different services and/or applications running on the UE and that the UE-substitute-controller is being implemented at the location, namely within the UE, that anyhow monitors the quality of the radio link regulatory. Implementing the UE-substitute-controller within the other parts of the communication system provides the advantage that the method even works with legacy UEs.

In an embodiment, the UE-substitute-unit is being implemented within the communication system, in particular within the core of the communication system or close to the location of the related application/service within the communication system. In particular, the communication link that connects the UE-substitute-unit with the bus architecture is a fixed line, e.g. xDSL or Ethernet.

This provides the advantage of having a very stable communication link for the communication with the UE-substitute-unit and/or that latency is being reduced if the location is being close to the location of the related application/service within the network.

In an embodiment, the UE-network-function of UE-substitute-unit is updated with the actual network-function of the UE or with all the network functions relating to a certain service or application of the UE. This update process can be facilitated by exchanging the actual network function with the UE as long as the communication link is not yet broken. It is possible that this exchange is being done if it gets likely that the broken link will occur soon. Another possibility is to exchange the network functions relating to the service and/or to the application at the start of the communication. In this case, the UE-substitute-unit and/or the UE-substitute-controller can monitor the data traffic between the UE and the application and/or the service within the communication network and determine which is the current network function that shall be used by the UE-substitute-unit (which is the network function the UE would use next).

This provides the advantage that it is not necessary to store a large number of network functions within the UE-substitute-unit that cover all possible services and/or applications. This also provides the advantage that the network functions are always up-to-date and/or that the UE-substitute-unit can be set up on demand.

In an embodiment, the UE-substitute-unit at least temporarily substitutes the UE if the UE does not execute its network functionality for a certain time-period. In an embodiment, the certain time-period depends on the currently implemented network function on the UE-substitute-unit, on the application running on the UE and/or on user preferences.

This provides the advantage that the UE-substitute-unit can monitor the activity of the UE in the background and only process data if the certain time-period has been elapsed. In particular, the certain time-period is set according to the service and/or the application running on the UE. This provides the advantage that different time-periods can be chosen that account that it might take different time-periods to execute different network functions. Hence, the certain time-period can be tailored the actual use case in order to reduce latency.

In an embodiment, the UE-substitute-unit is closed after executing of the UE-network-function and/or writing the data output into the database. In other words, if the UE-substitute-unit is implemented as a virtual or cloudified unit on a server, the corresponding memory is being freed again.

This provides the advantage that no memory is being blocked if it is not used, this provides the possibility of creating a very flexible and efficient network environment.

According to a second aspect of the invention, a UE-substitute-controller for communication in a communication system is disclosed, wherein the UE-substitute-controller comprises a communication interface that is configured to monitor a quality of a radio link that is used by an UE and/or to receive a trigger signal from the UE, wherein the UE-substitute-controller is configured to trigger an instantiation of an UE-substitute-unit by sending a trigger signal or that the UE-substitute-controller is configured to instantiate the UE-substitute-unit by itself if
- if the quality of the radio link is lower than a first threshold, and/or
- if a trained artificial intelligence of the UE-substitute-controller that monitors the quality of the radio link and/or conditions of the UE creates a trigger command, in particular if a probability that the radio link will fail is lower than a second threshold.

If the UE-substitute-controller send the trigger signal, another entity within the network will actually instantiate the UE-substitute-unit. This other entity can be a further UE-substitute-controller. For example: A first UE-substitute-controller can be implemented within the UE. This first UE-substitute-controller can send the trigger signal to a second UE-substitute-controller located at the core of the network, wherein the second UE-substitute-controller instantiates the UE-substitute-unit on receiving the trigger signal. The UE-substitute-controller can be implemented on the UE or within the communication network. The UE-substitute-controller can also be configured to execute the steps of the method described above, which are related to it. In particular, the UE-substitute-controller is configured to send the address of the UE-substitute-unit to the other domains so that the UE-substitute-unit can address the UE-substitute-unit. In an embodiment, the UE-substitute-unit is configured to substitute the UE without having explicitly being addressed within the data packet. This is because the UE-substitute-unit receives the data packet due to the bus architecture of the communication link anyhow and can take over if the UE is not being available based on the criteria explained above.

This provides advantages that are basically analog described within the context of the inventive method.

According to a third aspect of the invention, a UE-substitute-unit of a communication system is disclosed, wherein the UE-substitute-unit comprising at least one UE-network-function of a UE, wherein the UE-substitute-unit is configured to at least temporarily substitute the UE by retrieving data from a database and/or to write data output obtained by its at least UE-network-function into the database. The UE-substitute-unit can also be configured to execute the other steps of the method described above that are related to the UE-substitute-unit. The UE-network-function mirror the functionality of the UE. In particular, the UE-substitute-unit can be related to a certain UE so that only substitutes this certain UE. The UE-substitute-unit can be a standalone unit or can be implemented virtually or cloudified on the server of the communication system in particular, the UE-substitute-unit comprises a communication interface that is being configured to exchange data traffic with the communication link to which the domains are being connected to. In particular, this communication interface is based on a fixed line communication link to a provide stable communication environment. For that purpose, the UE-substitute-unit can be located within the core of the communication.

This provides advantages that are basically analog described within the context of the inventive method.

According to a fourth aspect of the invention, a communication system is disclosed that is being configured to execute the steps of the method described above. In particular, the communication system comprises the UE-substitute-controller and/or the UE-substitute-unit. The communication system can also be named network or communication network. Within the context of this invention, these terms do not result in any technical difference.

This provides advantages that are basically analog described within the context of the inventive method.

In the following, preferred implementation examples of the present invention are explained with reference to the accompanying figure:
- Fig. 1:: shows an overview of an end-to-end service-based architecture of a (tele) communication system according to the invention;
- Fig. 2:: shows the communication system of Fig. 1 with a broken radio link connecting an UE to the communication system;
- Fig. 3:: shows the communication system of Fig. 1 comprising an UE-substitute-unit and/or an UE-substitute-controller according to the invention;
- Fig. 4:: shows a workflow of the communication of the communication system of Fig. 3 with an intact radio link of the UE;
- Fig. 5:: shows the workflow of Fig. 4 in greater detail;
- Fig. 6:: shows a workflow of the communication of the communication system of Fig. 3 with a broken radio link of the UE;
- Fig. 7:: shows the workflow of Fig. 6 in greater detail;
- Fig. 8:: shows a 5G core architecture communication system with a network function connected via a non-interrupt-free SBI connection;
- Fig. 9:: shows the communication system of Fig. 8 with the inventive UE-substitute-unit;

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

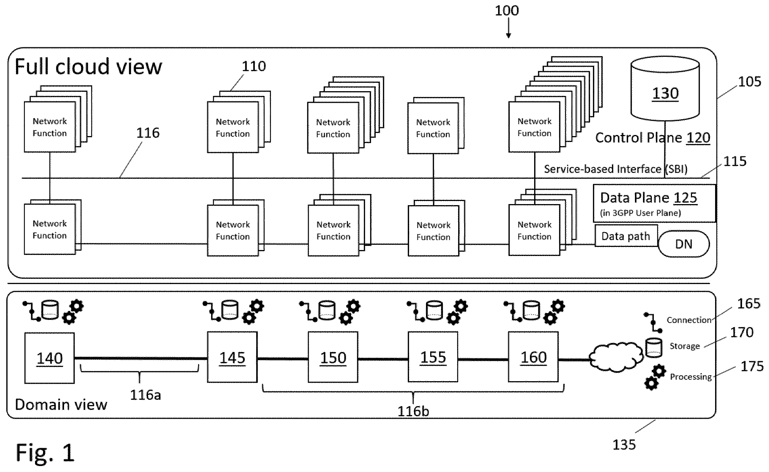

Fig. 1 shows an overview of an end-to-end service-based architecture of a (tele) communication system 100 according to the invention.

An upper part of the picture 105 shows a full cloud view of the communication system 100 that shows various network functions 110 connected by means of a service-based interface (SBI) 115, wherein the SBI 115 serves as a communication link 116 to enable data traffic between the various network functions designed as a communication bus 116 architecture. It is shown that a first part of the network functions 110 operate on the control plane 120, wherein a second part of the network functions 110 operate on the data plane 125. The network functions 110 pull and/or push necessary data for processing a service and/or an application into a state and parameter database 130 that can also be connected via the communication link 116. Hence, it is a prerequisite of executing the service and/or the application that all the network functions 110 have an active communication link 116 to the state and parameter database 130.

A lower part of the picture shows the domain view 135, wherein the network functions of the upper part of the picture 105 are related to the respective entities shown in the domain view 135. Domains units 137 comprise an end device 140 that will be called a UE 140 in the following. The UE 140 communicates via a radio link 116a with the rest of the communication system 100 by sending its traffic to a radio access network 145 that is in data communication with multi access edge computing devices 150, data transport means 155 and/or a core 160 of the communication system. It is also shown that the domains units 137 can comprise connection interfaces 165, storage means 170 and processing power 175. The communication link 116b behind the radio access network 145 in direction of the core 160 is in general more stable than the radio link 116b.

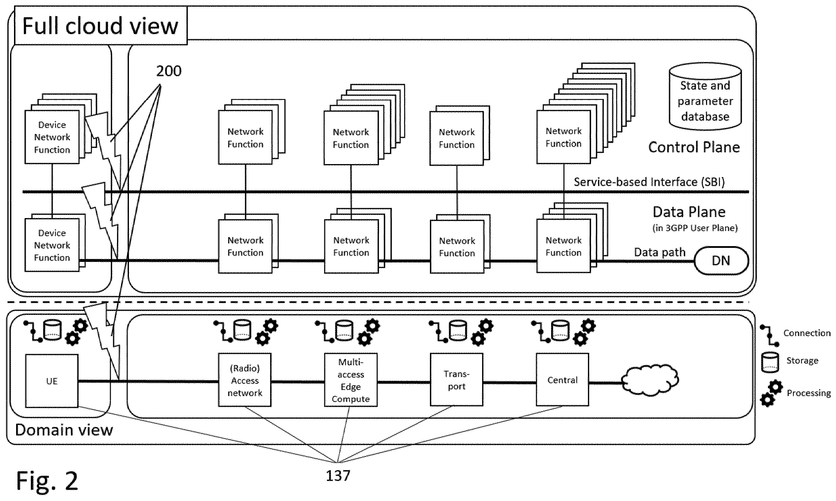

Fig. 2 shows the communication system of Fig. 1 with a broken radio link 200 connecting the UE 140 to the communication system. As no data traffic can be send over the broken radio link 200, the UE 140 cannot push and/or pull data that is necessary to run its network functions 110 to the state and parameter database 130. Hence, data traffic will get lost in this scenario and applications and/or services can at least temporarily not run.

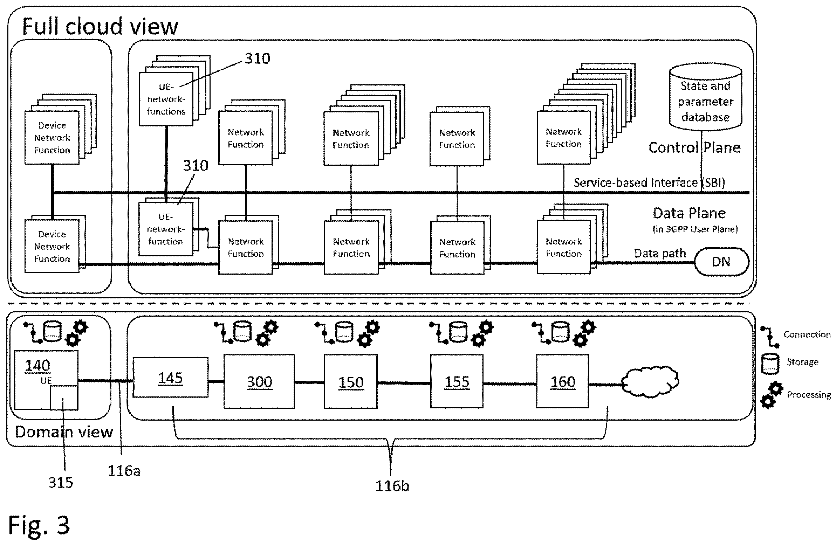

Fig. 3 shows how data loss and/or termination of the service or application can be avoided by placing a UE-substitute unit 300 within the communication system 100. In principle, the location of the UE-substitute unit 300 can be chosen arbitrarily with the exception that the UE-substitute unit 300 shall not exchange its data via the radio link 116a because in this case the UE-substitute unit 300 will not be able to substitute the UE 140 if the radio link 116a breaks. The full cloud view shows that the UE-substitute unit 300 comprises at least one UE-network function 310 that mirrors the corresponding network function of the UE 140 and that is connected by means of the SBI 115 with the other network functions and/or with the state and parameter database 130. Hence, if the radio link 116a breaks the UE-substitute unit 300 can at least temporarily substitute the UE 140. In this scenario, the at least one UE-network function 310 acts like the corresponding network function of the UE 140 so that all the other domain units 137 basically "see" no the difference because all the necessary data needed by them can be pulled from the state and parameter database 130.

In addition, Fig. 3 shows an optional UE-substitute-controller 315 that can be implemented in the UE 140 and monitors the quality of the radio link 116a and calculates the likelihood that the radio link 116a will fail in the near future. In this case, the UE-substitute-controller 315 can send a trigger signal to instantiate the UE-substitute unit 300 within the communication system 100. For example, the UE-substitute-controller 315 can send the trigger signal if the signal strength of the radio link 116a is below a first threshold, the bandwidth is below a second threshold and/or the latency is larger than the third threshold.

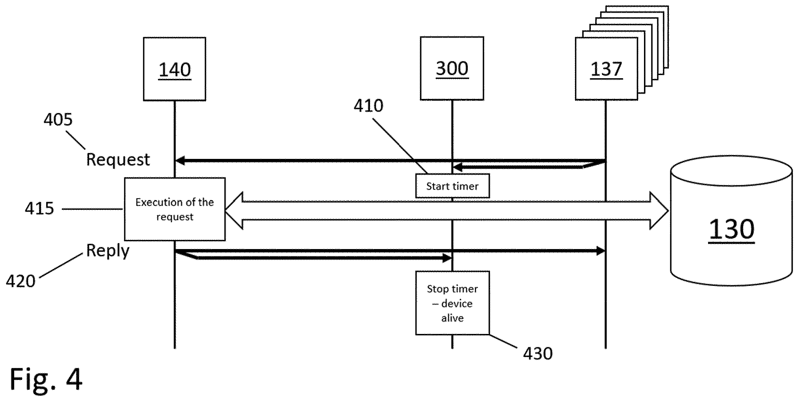

Fig. 4 shows a workflow of the communication of the communication system of Fig. 3 with an intact radio link 116a.

A network function of any of the domain units 137 sends a request 405 over the SBI interface 115. The data package of the request can be designed to use multicast addressing. The address of the multicast message is defined in the multicast address range of the communication system and is the same for the UE 140 and the UE-substitute-unit 300. When the UE-substitute unit 300 registers the request 405, it can be configured to start 410 a timer. If the UE 140 executes the request 415 and provides the corresponding parameters into the state and parameter database 130 before the timer is stopped 430 and sends the corresponding reply 420, the UE-substitute unit 300 can conclude that the UE 140 works properly and that the radio link 116a is active so that data transfer is possible.

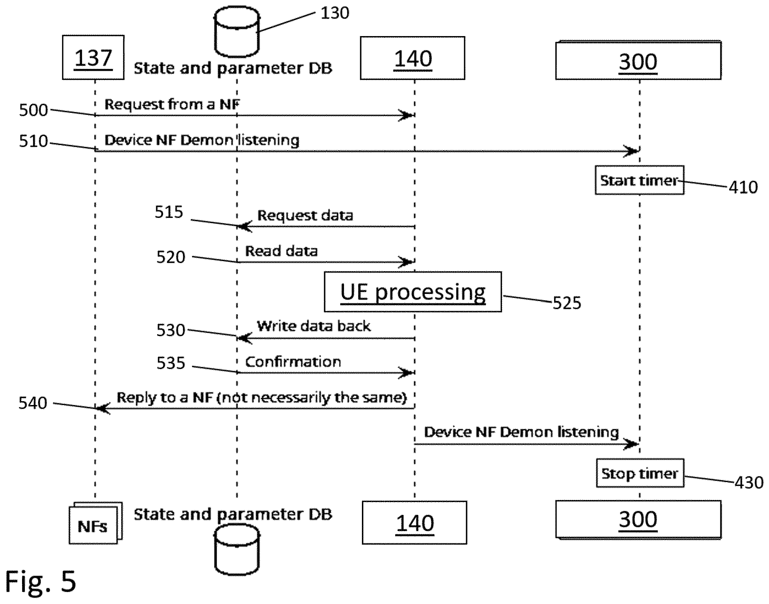

Fig. 5 shows the workflow of Fig. 4 in greater detail.

In step 500, the network function of the domain unit 137 sends a request to the UE 140. Step 510: Parallel to that, the UE-substitute unit 300 is listening the data traffic and starts 410 the timer. Step 515: the UE 140 request the necessary data to execute its network function from the state and parameter database 130. Step 520: the UE 140 reads the data and in step 525, the network function of the UE 140 processes the data. Step 530: the UE 140 writes the data back into the state and parameter database 130. Step 535: the state and parameter database 130 confirms successful writing of the data into the state and parameter database 130 to the UE 140. Step 540: the UE 140 can send a reply to another domain unit 137 to continue the service. During all this time, the UE-substitute-unit 300 is listening to the data traffic. In step 545 the timer is stopped 430.

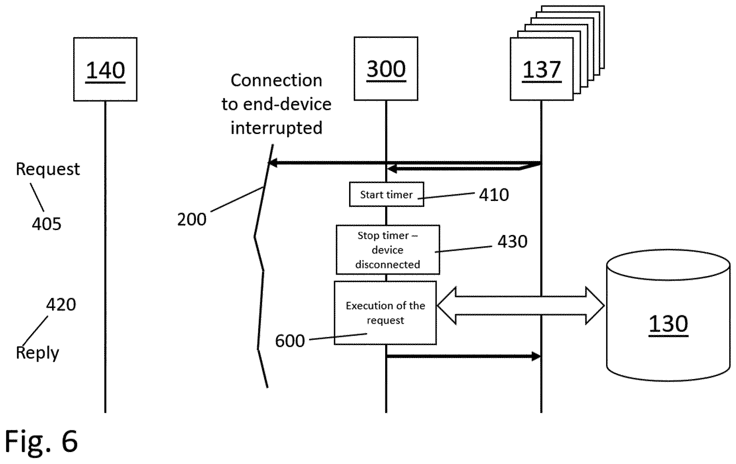

Fig. 6 shows a workflow of the communication of the communication system 100 of Fig. 3 with a broken radio link 116a of the UE 140.

The network function of any of the domain units 137 sends a request 405 over the SBI interface 115. The data package of the request can be designed to use multicast addressing. The address of the multicast message is defined in the multicast address range of the communication system and is the same for the UE 140 and the UE-substitute-unit 300. However due to the broken radio link 116a, the request cannot reach the UE 140. When the UE-substitute unit 300 registers the request 405, it can be configured to start 410 a timer. Since the UE-substitute unit 300 does not observe any data communication from the UE 140 until the timer is stopped 430 it can conclude that the radio link 116a is broken and that the UE 140 is not being able fulfill its tasks. In this case, the UE-network function that is implemented within the UE-substitute unit 300 takes over processing 600 the request 405 by exchanging the corresponding data with the state and parameter database 130. Hence, as the UE-substitute unit 300 takes over, no data traffic will get lost.

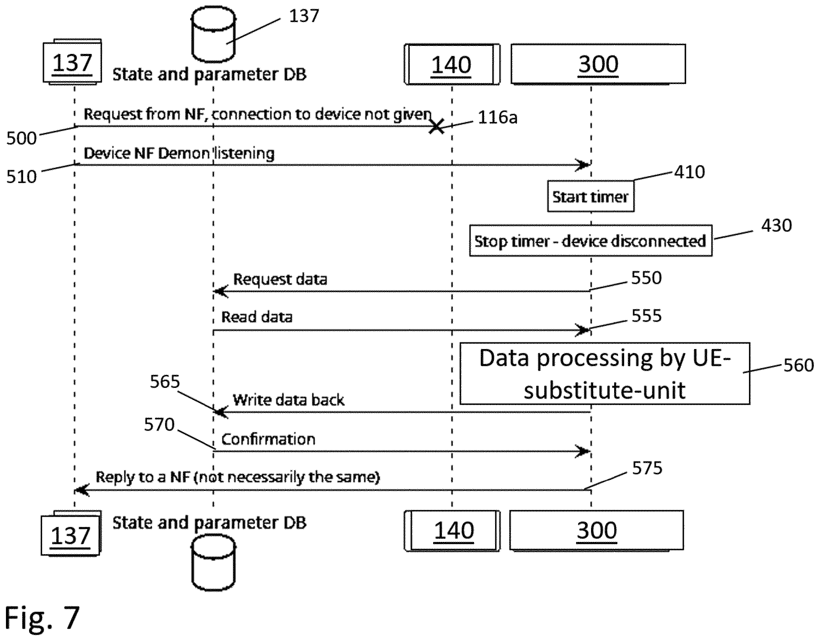

Fig. 7 shows the workflow of Fig. 6 in greater detail.

In step 500, the network function of the domain unit 137 sends a request 405 to the UE 140. Step 510: Parallel to that, the UE-substitute unit 300 is listening the data traffic and starts 410 the timer. Due to the interrupted radio link 116a, the request 405 cannot reach the UE 140 and cannot be processed accordingly. In step 545 the timer is stopped 430 and the UE-substitute unit 300 concludes that the UE 140 is disconnected from the communication system 100 because it did not observe any data traffic from the UE 140 while being in its listening modus. Hence, the UE-substitute-unit 300 takes over and substitutes the UE 140 at least temporarily. In step 550, the UE-substitute-unit 300 requests the data from the state and parameter database 130 and reads the data in step 555 accordingly. In step 560, the UE-substitute-unit 300 processes the data and write the data in step 565 back into the state and parameter database 130. In step 570, the state and parameter database 130 confirms that the data was successfully written within its database. In step 575, the UE-substitute-unit 300 sends a reply message to one of the domain units 137 so that the service/application can continue.

The NFs of the UE 140 will serve and control a number of higher layer applications (not depicted in the figures).

The waiting time of the timer can be defined by context information (e.g. measurements) of previous request-reply processes or by input of a machine learning system. In the first case, it might be extended by a security factor, e.g. the double of the measured time or by a result of a machine learning process as well.

Following the SBA/cloud-native principles, the NFs of the UE 140 and the duplicated NF of the UE-substitute-unit 300 should not keep parameters and states. This information is stored in the state and parameter database 130. It can make sense to add an additional field in the database 130 to indicate that the NF of the UE 140 might be represented by the corresponding NF of the UE-substitute-unit 300. This enables the NF of the UE 140 in case of a connection loss and a reconnection to trigger higher layer UE applications for an update and refresh process. It is also possible that the higher layer UE 140 applications will follow the SBA/cloud-native principles and all states and parameters are stored in the state and parameter database 130. In this case, the NFs of the UE 140 can trigger the higher layer UE applications to contact the state and parameter database 130 for refreshing and updating.

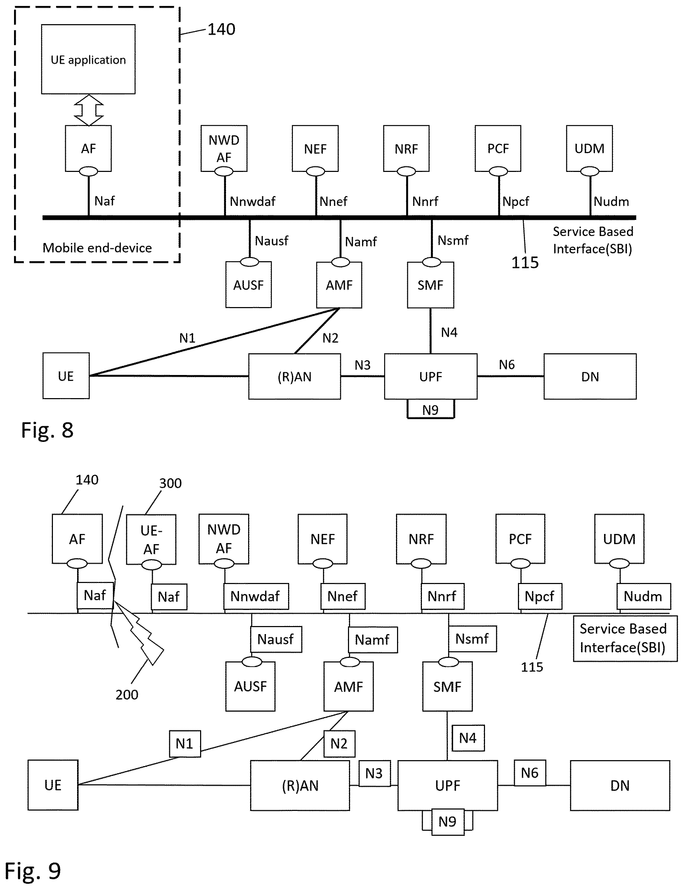

Fig. 8 shows a 5G core architecture communication system with a network function connected via a non-interrupt-free SBI connection;

As an example: A current 5G Core is mainly but not completely implemented following the SBA/cloud-native principles. For adapting the invention to a 5G Core, a candidate for an end-device NF might be the Application Function (AF), which can run in a mobile device, e.g. a car, robot, handheld, etc.

Fig. 9 shows the communication system of Fig. 8 with the inventive UE-substitute-unit 300 that shows a copy of the application function so that it can mimic the functionality of the UE 140.

The AF interacts and controls the higher layer UE applications, which can be implemented as cloud-native services or not. Since the mobile UE 140 can be connected via the radio or wireless link 116a (3GPP or none-3GPP/IEEE technologies), the link can get broken and the SBI connection towards the AF can be interrupted. In this case, the UE-substitute-unit 300 takes over the respective functionality of the UE 140 and the data traffic can continue.

## Claims

1. A method for communication in a communication system, comprising the following steps
• providing domain units of a service-based architecture of the communication system, wherein the domain units provide, by means of network functions, a functionality of the network; wherein at least one of the domain units is represented by a UE having at least one UE-network-function, wherein the UE communicates with the network by means of a radio link;
• providing a database within the network, wherein the domain units communicate via a communication link with the database, and wherein the domain units to execute their network functionality, each retrieve data from the database and/or write data output obtained by their network functions into the database;
• providing a UE-substitute-unit within the communication system having at least one of said UE-network-functions, said UE-substitute-unit at least temporarily substituting for said UE, wherein the UE-substitute-unit executes the at least UE-network-functions and retrieves data from said database and/or writes data output obtained by the UE-network-function into said database.

2. The method of claim 1, wherein the communication link is multicast capable and/or bus capable.

3. The method of any of the claims, wherein the UE and/or an application "App" running on the UE triggers an instantiation of the UE-substitute-unit, in particular by sending a corresponding trigger signal to a UE-substitute-controller.

4. The method of claim 3, wherein a UE-substitute-controller and/or the UE monitors a quality of the radio link send the trigger signal to instantiate the UE-substitute-unit
• if the quality of the radio link is lower than a first threshold, and/or
• if a trained artificial intelligence of the UE and/or the UE-substitute-controller monitors the quality of the radio link and/or conditions of the UE creates a trigger command, in particular if a probability that the radio link will fail is lower than a second threshold.

5. The method of the claim 4, wherein the application running on the UE and/or a user defines the first threshold and/or the second threshold.

6. The method of any of the claims, wherein the UE-substitute-unit and/or the UE-substitute-controller signals a communication address of the UE-substitute-unit to the other domain units.

7. The method of any of the claims 4 to 6, wherein the UE-substitute-controller is implemented on the UE or within the network.

8. The method of any of the claims, wherein the UE-substitute-unit is being implemented within the network, in particular within the core or close to the application related location within the network.

9. The method of any of the claims, wherein the UE-network-function of UE-substitute-unit is updated with the actual network-function of the UE.

10. The method of any of the claims, wherein the UE-substitute-unit at least temporarily substitutes the UE if the UE does not execute its network functionality for a certain time period.

11. The method of claim 10, wherein the certain time period depends on the currently implemented network function on the UE-substitute-unit, on the application running on the UE and/or on user preferences and/or context information of the past.

12. The method of any of the claims, wherein the UE-substitute-unit is closed after executing of the UE-network-function and/or writing the data output into the database.

13. A communication system comprising,
Domain units of a service-based architecture of the communication system, wherein
- the domain units are configured to provide, by means of network functions, network functionality,
- at least one of the domain units is represented by a User Equipment, UE, comprising at least one UE-network-function,
- the UE communicates with the network via a radio link,
A database wherein
- the domain units are configured to communicate with the database via a communication link,
- the domain units, to execute their network functionality, are configured to retrieve data from the database, and/or write data output generated by their respective network functions into the database,
A UE-substitute-controllel comprising a communication interface that is configured to monitor a quality of a radio link that is used by a UE and/or to receive a trigger signal from the UE, wherein the UE-substitute-controller is configured to trigger an instantiation of a UE-substitute-unit,
- if the quality of the radio link is lower than a first threshold, and/or
- if a trained artificial intelligence of the UE-substitute-controller that monitors the quality of the radio link and/or conditions of the UE creates a trigger command, in particular if a probability that the radio link will fail is lower than a second threshold,
A UE-substitute-unit comprising least one UE-network-function of the UE, wherein the UE-substitute-unit is configured to
- at least temporarily substitute the UE by executing the at least one UE-network-function,
- retrieve data from the database, and/or,
- write data output generated by the UE-network-function into the database.

## Patentansprüche

1. Verfahren für Kommunikation in einem Kommunikationssystem, umfassend die folgenden Schritte:
• Bereitstellen von Domäneneinheiten einer dienstbasierten Architektur des Kommunikationssystems, wobei die Domäneneinheiten mittels Netzwerkfunktionen eine Funktionalität des Netzwerks bereitstellen; wobei mindestens eine der Domäneneinheiten durch ein UE mit mindestens einer UE-Netzwerkfunktion repräsentiert wird, wobei das UE mit dem Netzwerk mittels einer Funkverbindungsstrecke kommuniziert;
• Bereitstellen einer Datenbank innerhalb des Netzwerks, wobei die Domäneneinheiten über eine Kommunikationsverbindungsstrecke mit der Datenbank kommunizieren, und wobei die Domäneneinheiten, um ihre Netzwerkfunktionalität auszuführen, jeweils Daten aus der Datenbank abrufen und/oder durch ihre Netzwerkfunktionen erlangte Datenausgaben in die Datenbank schreiben;
• Bereitstellen einer UE-Substitut-Einheit innerhalb des Kommunikationssystems mit mindestens einer der UE-Netzwerkfunktionen, wobei die UE-Substitut-Einheit mindestens temporär als Substitut für das UE agiert, wobei die UE-Substitut-Einheit die mindestens UE-Netzwerkfunktionen ausführt und Daten aus der Datenbank abruft und/oder durch die UE-Netzwerkfunktion erlangte Daten in die Datenbank schreibt.

2. Verfahren nach Anspruch 1, wobei die Kommunikationsverbindungsstrecke multicastfähig und/oder busfähig ist.

3. Verfahren nach einem der Ansprüche, wobei das UE und/oder eine Applikation "App", die auf dem UE läuft, eine Instanziierung der UE-Substitut-Einheit auslöst, insbesondere durch Senden eines entsprechenden Auslösesignals an eine UE-Substitut-Steuervorrichtung.

4. Verfahren nach Anspruch 3, wobei eine UE-Substitut-Steuervorrichtung und/oder das UE eine Qualität der Funkverbindungsstrecke überwacht das Auslösesignal senden, um die US-Substitut-Einheit zu instanziieren,
• wenn die Qualität der Funkverbindungsstrecke niedriger als eine erste Schwelle ist, und/oder
• wenn eine trainierte künstliche Intelligenz des UE und/oder der UE-Substitut-Steuervorrichtung die Qualität der Funkverbindungsstrecke und/oder Bedingungen des UE überwacht einen Auslösebefehl erstellt, insbesondere wenn eine Wahrscheinlichkeit, dass die Funkverbindungsstrecke ausfallen wird, niedriger als eine zweite Schwelle ist.

5. Verfahren nach Anspruch 4, wobei die Anwendung, die auf dem UE läuft, und/oder ein Benutzer die erste Schwelle und/oder die zweite Schwelle definiert.

6. Verfahren nach einem der Ansprüche, wobei die UE-Substitut-Einheit und/oder die US-Substitut-Steuervorrichtung eine Kommunikationsadresse der UE-Substitut-Einheit an die anderen Domäneneinheiten signalisiert.

7. Verfahren nach einem der Ansprüche 4 bis 6, wobei die UE-Substitut-Steuervorrichtung auf dem UE oder innerhalb des Netzwerks implementiert ist.

8. Verfahren nach einem der Ansprüche, wobei die UE-Substitut-Einheit innerhalb des Netzwerks implementiert wird, insbesondere innerhalb des Kerns oder nahe bei dem Applikations-bezogenen Ort innerhalb des Netzwerks.

9. Verfahren nach einem der Ansprüche, wobei die UE-Netzwerkfunktion der UE-Substitut-Einheit mit der tatsächlichen Netzwerkfunktion des UE aktualisiert wird.

10. Verfahren nach einem der Ansprüche, wobei die UE-Substitut-Einheit mindestens temporär das UE substituiert, wenn das UE seine Netzwerkfunktionalität für eine bestimmte Zeitdauer nicht ausführt.

11. Verfahren nach Anspruch 10, wobei die bestimmte Zeitdauer von der aktuell implementierten Netzwerkfunktion auf der UE-Substitut-Einheit, von der auf dem UE laufenden Applikation und/oder von Benutzerpräferenzen und/oder Kontextinformationen der Vergangenheit abhängt.

12. Verfahren nach einem der Ansprüche, wobei die UE-Substitut-Einheit nach Ausführen der UE-Netzwerkfunktion und/oder Schreiben der Datenausgabe in die Datenbank geschlossen wird.

13. Kommunikationssystem, umfassend
Domäneneinheiten einer dienstbasierten Architektur des Kommunikationssystems, wobei
- die Domäneneinheiten dazu eingerichtet sind, mittels Netzwerkfunktionen eine Netzwerkfunktionalität bereitzustellen,
- mindestens eine der Domäneneinheiten durch ein User Equipment, UE, mit mindestens einer UE-Netzwerkfunktion repräsentiert wird,
- das UE mit dem Netzwerk mittels einer Funkverbindungsstrecke kommuniziert, eine Datenbank, wobei
- die Domäneneinheiten dazu eingerichtet sind, über eine Kommunikationsverbindungsstrecke mit der Datenbank zu kommunizieren,
- die Domäneneinheiten, um ihre Netzwerkfunktionalität auszuführen, dazu eingerichtet sind, Daten aus der Datenbank abzurufen und/oder durch ihre jeweiligen Netzwerkfunktionen erlangte Datenausgaben in die Datenbank zu schreiben,
eine UE-Substitut-Steuervorrichtung mit einer Kommunikationsschnittstelle, die dazu eingerichtet ist, eine Qualität einer Funkverbindungsstrecke zu überwachen, die von einem UE benutzt wird, und/oder ein Auslösesignal von dem UE zu empfangen, wobei die UE-Substitut-Steuereinheit dazu eingerichtet ist, eine Instanziierung einer UE-Substitut-Einheit auszulösen,
- wenn die Qualität der Funkverbindungsstrecke niedriger als eine erste Schwelle ist, und/oder
- wenn eine trainierte künstliche Intelligenz der UE-Substitut-Steuervorrichtung, welche die Qualität der Funkverbindungsstrecke und/oder Bedingungen des UE überwacht, einen Auslösebefehl erstellt, insbesondere wenn eine Wahrscheinlichkeit, dass die Funkverbindungsstrecke ausfallen wird, niedriger als eine zweite Schwelle ist,
eine UE-Substitut-Einheit mit mindestens einer UE-Netzwerkfunktion des UE, wobei die UE-Substitut-Einheit mindestens dazu eingerichtet ist,
- mindestens temporär durch Ausführen der mindestens einen UE-Netzwerkfunktion als Substitut für das UE zu agieren,
- Daten aus der Datenbank abzurufen und/oder
- durch die UE-Netzwerkfunktion generierte Datenausgaben in die Datenbank zu schreiben.

## Revendications

1. Procédé de communication dans un système de communication, comprenant les étapes suivantes consistant à :
• fournir des unités de domaine d'une architecture basée sur les services du système de communication, dans lequel les unités de domaine fournissent, au moyen de fonctions de réseau, une fonctionnalité du réseau, dans lequel au moins une des unités de domaine est représentée par un UE possédant au moins une fonction de réseau UE, dans lequel l'UE communique avec le réseau par liaison radio ;
• fournir une base de données au sein du réseau, dans lequel les unités de domaine communiquent avec la base de données via une liaison de communication et dans lequel les unités de domaine, pour exécuter leurs fonctionnalités de réseau, extraient chacune des données de la base de données et/ou écrivent les données obtenues par leurs fonctions de réseau dans la base de données ;
• fournir une unité de substitution d'UE au sein du système de communication possédant au moins une desdites fonctions de réseau UE, ladite unité de substitution d'UE se substituant au moins temporairement audit UE, dans lequel l'unité de substitution d'UE exécute au moins les fonctions de réseau UE et extrait les données de ladite base de données et/ou écrit les données obtenues par la fonction de réseau UE dans ladite base de données.

2. Procédé selon la revendication 1, dans lequel la liaison de communication est compatible multidiffusion et/ou bus.

3. Procédé selon une quelconque des revendications, dans lequel L'UE et/ou une application « App » exécutée sur l'UE déclenche une instanciation de l'unité de substitution d'UE, notamment en envoyant un signal de déclenchement correspondant à un contrôleur de substitution d'UE.

4. Procédé selon la revendication 3, dans lequel un contrôleur de substitution d'UE et/ou l'UE surveille une qualité de la liaison radio et envoie le signal de déclenchement pour instancier l'unité de substitution d'UE
• si la qualité de la liaison radio est inférieure à un premier seuil, et/ou
• si une intelligence artificielle entraînée de l'UE et/ou du contrôleur de substitution de l'UE surveille la qualité de la liaison radio et/ou les conditions de l'UE et crée une commande de déclenchement, notamment si la probabilité de défaillance de la liaison radio est inférieure à un deuxième seuil.

5. Procédé selon la revendication 4, dans lequel l'application exécutée sur l'UE et/ou un utilisateur définit le premier seuil et/ou le deuxième seuil.

6. Procédé selon une quelconque des revendications, dans lequel l'unité de substitution d'UE et/ou le contrôleur de substitution d'UE signale une adresse de communication de l'unité de substitution d'UE aux autres unités de domaine.

7. Procédé selon une quelconque des revendications 4 à 6, dans lequel le contrôleur de substitution d'UE est implémenté sur l'UE ou au sein du réseau.

8. Procédé selon une quelconque des revendications, dans lequel l'unité de substitution d'UE est implémentée au sein du réseau, notamment au cœur du réseau ou à proximité de l'emplacement lié à l'application au sein du réseau.

9. Procédé selon une quelconque des revendications, dans lequel la fonction de réseau d'UE de l'unité de substitution d'UE est mise à jour avec la fonction de réseau réelle de l'UE.

10. Procédé selon une quelconque des revendications, dans lequel l'unité de substitution d'UE remplace au moins temporairement l'UE si ce dernier n'exécute pas sa fonctionnalité de réseau pendant un certain temps.

11. Procédé selon la revendication 10, dans lequel la durée déterminée dépend de la fonction de réseau actuellement implémentée sur l'unité de substitution d'UE, de l'application exécutée sur l'UE et/ou des préférences de l'utilisateur et/ou des informations contextuelles passées.

12. Procédé selon une quelconque des revendications, dans lequel l'unité de substitution d'UE est fermée après l'exécution de la fonction de réseau d'UE et/ou l'écriture des données de sortie dans la base de données.

13. Système de communication comprenant
des unités de domaine d'une architecture basée sur les services du système de communication, dans lequel :
- les unités de domaine sont configurées pour fournir, au moyen de fonctions de réseau, une fonctionnalité de réseau,
- au moins une unité de domaine est représentée par un équipement d'utilisateur, UE, comprenant au moins une fonction de réseau d'UE,
- l'UE communique avec le réseau via une liaison radio, une base de données dans laquelle
- les unités de domaine sont configurées pour communiquer avec la base de données via une liaison de communication,
- les unités de domaine, pour exécuter leurs fonctionnalités de réseau, sont configurées pour extraire des données de la base de données et/ou écrire les données générées par leurs fonctions de réseau respectives dans la base de données,
un contrôleur de substitution d'UE comprenant une interface de communication qui est configurée pour surveiller la qualité d'une liaison radio utilisée par un UE et/ou pour recevoir un signal de déclenchement de l'UE, dans lequel le contrôleur de substitution d'UE est configuré pour déclencher une instanciation d'une unité de substitution d'UE
- si la qualité de la liaison radio est inférieure à un premier seuil, et/ou
- si une intelligence artificielle entraînée du contrôleur de substitution d'UE qui surveille la qualité de la liaison radio et/ou les conditions de l'UE crée une commande de déclenchement, notamment si la probabilité de défaillance de la liaison radio est inférieure à un deuxième seuil,
une unité de substitution d'UE comprenant au moins une fonction de réseau d'UE de l'UE, dans lequel l'unité de substitution d'UE est configurée pour
- remplacer au moins temporairement l'UE en exécutant la au moins une fonction de réseau d'UE,
- extraire des données de la base de données et/ou
- écrire les données de sortie générées par la fonction de réseau d'UE dans la base de données.
